# FASCICULE DE BREVET EUROPEEN

(11) **EP 2 513 350 B1**
(45) Date de publication et mention de la délivrance du brevet: **18.10.2017**
(21) Numéro de dépôt: 10795307.7
(22) Date de dépôt: 15.12.2010
(51) Int. Cl.: C22C 47/20, C22C 49/11, C22C 47/06, B22F 3/00, B22F 3/15

(54) **PROCEDE DE FABRICATION D'UN INSERT DE FORME DROITE EN MATERIAU COMPOSITE A MATRICE METALLIQUE**
VERFAHREN ZUR HERSTELLUNG EINES GERADEN EINSATZES AUS EINEM METALLMATRIXVERBUNDMATERIAL
METHOD FOR MANUFACTURING A STRAIGHT INSERT MADE OF METAL MATRIX COMPOSITE MATERIAL

(30) Priorité: 16.12.2009 FR 0959069
(43) Date de publication de la demande: 24.10.2012
(73) Titulaire: Safran Aircraft Engines, 75015 Paris (FR); Messier-Bugatti-Dowty, 78140 Vélizy-Villacoublay (FR)
(72) Inventeur: FRANCHET, Jean-Michel, Patrick, Maurice, 75018 Paris (FR); KLEIN, Gilles, Charles, Casimir, 95540 Mery Sur Oise (FR); MASSON, Richard, 78530 Buc (FR); SALVAT, Louis, 38230 Tignieu Jameyzieu (FR)
(74) Mandataire: Gevers & Orès
(86) Numéro de dépôt international: PCT/EP2010/069738
(87) Numéro de publication internationale: WO 2011/073247

(56) Documents cités:
- EP-A1- 1 726 677
- WO-A2-2010/001069
- FR-A1- 2 919 284
- FR-A1- 2 925 896

## Description

La présente invention concerne le domaine des matériaux composites à matrice métallique et vise plus particulièrement un insert formé de fibres céramiques dans une matrice métallique pour renforcer une pièce métallique.

Dans le domaine de l'aéronautique, notamment, un objectif constant est l'optimisation de la résistance des pièces pour une masse et un encombrement minimaux. Certaines pièces peuvent désormais comporter un insert en matériau composite à matrice métallique, désigné par la suite CMM, la pièce pouvant être par ailleurs monolithique. Un tel matériau composite comporte une matrice d'alliage métallique, par exemple d'alliage de titane Ti, au sein de laquelle s'étendent des fibres, par exemple des fibres céramiques de carbure de silicium SiC. De telles fibres présentent une résistance en traction bien supérieure à celle du titane (typiquement, 4000 MPa contre 1000 MPa). Ce sont donc les fibres qui reprennent les efforts, la matrice d'alliage métallique assurant une fonction de liant avec le reste de la pièce, ainsi que de protection et d'isolation des fibres, qui ne doivent pas entrer en contact les unes avec les autres. En outre, les fibres céramiques sont résistantes à l'érosion, mais doivent nécessairement être renforcées par du métal.

Ces matériaux composites peuvent être utilisés dans la fabrication de disques, d'arbres, de corps de vérins, de carters, d'entretoises, comme renforts de pièces monolithiques telles des aubes, etc.

Pour des disques de compresseur dans un turboréacteur par exemple une technique connue de renforcement consiste à insérer dans la pièce un bobinage circulaire de fibres enduites. Une technique de fabrication d'insert CMM repose sur le principe de bobinage de fils enduits décrit dans le brevet EP1.726.677 déposé au nom de Snecma. L'insert est obtenu à partir d'une pluralité de fils enduits comportant chacun une fibre céramique enrobée d'une gaine métallique. Ce type de fil est désigné fil enduit par la suite. La fabrication comprend une étape de bobinage d'un faisceau ou d'une nappe liée de fils enduits autour d'une pièce de révolution perpendiculairement à l'axe de la pièce. L'insert est ensuite soumis à une étape de compression isostatique à chaud dans un conteneur. On désigne par conteneur une ébauche de pièce métallique dans laquelle on a usiné une cavité de réception de l'insert en matériau CMM et qui est ensuite soumise à un traitement de compaction isostatique à chaud. Ce traitement est désigné CIC par la suite.

Les pièces décrites ainsi obtenues sont de type circulaire et conviennent particulièrement, outre les disques de compresseur pour la réalisation de pièces circulaires telles que des arbres, des corps de vérins ou des carters.

D'autres pièces mécaniques requièrent des propriétés différentes de celles présentées par les pièces circulaires. C'est le cas notamment des bielles utilisées par exemple dans les systèmes d'atterrissage ou des pièces de structure telles que des suspensions moteur, de forme essentiellement oblongue. La fonction de ces pièces est de transmettre un effort de traction et/ou de compression unidirectionnel. Le renforcement de ces pièces nécessite alors des inserts en CMM de forme rectiligne au moins en partie. En effet les fibres doivent être orientées suivant la direction des efforts.

La fabrication de ces inserts de manière industrielle et au moindre coût est délicate.

On connaît un procédé de fabrication d'une pièce mécanique comportant au moins un insert en matériau CMM. Le procédé comprend la fabrication d'une ébauche d'insert par bobinage d'un faisceau ou d'une nappe liée de fils enduits autour d'un support annulaire dont une partie comprend une portion rectiligne.

Le procédé décrit dans le brevet FR 2.919.284 au nom de SNECMA et Messier-Dowty, développe ce principe et comprend ensuite l'insertion de l'ébauche d'insert ci-dessus dans un premier conteneur métallique, la compaction isostatique à chaud du premier conteneur, suivie de l'usinage de celui-ci pour former un élément d'insert rectiligne. Après la fabrication de cet élément d'insert, le procédé de fabrication d'une pièce mécanique comprend les étapes suivantes : insertion de l'élément d'insert dans un second conteneur, compaction isostatique à chaud du second conteneur et usinage du second conteneur pour former la pièce mécanique souhaitée. La pièce mécanique ainsi obtenue, par exemple une bielle, permet avantageusement de transmettre des efforts de traction et/ou de compression unidirectionnels dans le sens des fibres céramiques qui y ont été intégrées.

Au lieu de passer par l'étape intermédiaire de compaction de l'ébauche d'insert suivie de sa découpe en éléments d'insert rectilignes, on pourrait envisager de découper la bobine annulaire formant l'ébauche en assurant le maintien des fils enduits en faisceau. La demande de brevet FR 2.925.896 enseigne d'incorporer ce type de faisceau dans une rainure rectiligne débouchant à ses extrémités.

Cette solution présente plusieurs inconvénients qui impactent l'industrialisation de ces opérations :
On perd les fils enduits au niveau des parties non droites. Cette perte n'est pas négligeable car le demi-produit fil enduit représente un coût important dans le coût total de la pièce.

Le bobinage, notamment sur des formes ovales, induit des contraintes dans l'insert bobiné qui risquent de se relâcher se traduisant par une déformation de l'insert lors de la découpe.

Ces techniques nécessitent de multiplier les systèmes de maintien des fils enduits au droit des zones de découpe.

L'objectif de la présente invention est la mise au point d'une technique de réalisation d'inserts droits à coût réduit et facilement industrialisable.

On parvient à cet objectif avec un procédé de fabrication d'un insert de forme droite destiné à être intégré par C.I.C. dans un conteneur métallique, comprenant un faisceau de fils enduits, liés entre eux et de longueur déterminée, caractérisé par le fait que l'on dispose des fils enduits sur une longueur déterminée dans un outillage en forme de gouttière droite, en les juxtaposant de façon rectiligne et on lie les fils enduits entre eux.

La solution de l'invention permet donc de réduire les pertes de fils enduits d'une part et d'autre part sur le plan industriel des fabrications avec des fortes cadences et automatisables.

Plus particulièrement, le procédé consiste en la formation d'un empilement de nappes de fils enduits rectilignes obtenues en juxtaposant à plat un nombre déterminé de fils enduits, jusqu'à obtenir un nombre de nappes déterminé, et à lier les nappes entre elles, de manière à ce que de préférence elles soient maintenues aux extrémités.

Plus particulièrement, on dépose une première nappe sur une surface plane, notamment formée d'une feuille métallique, on recouvre la dernière nappe de l'empilement d'une autre feuille métallique et on lie l'ensemble.

Selon un mode de réalisation, on lie les nappes entre elles au moyen de sangles de métal disposées transversalement le long de l'empilement de fils enduits.

De préférence, on forme les nappes à partir de fils enduits que l'on déroule depuis des bobines de fils, et avantageusement on forme une nappe en déroulant simultanément les fils de la nappe depuis des bobines séparées. On découpe ensuite les fils enduits à ladite longueur déterminée correspondant à la longueur du faisceau de fils enduits de l'insert.

Selon un mode de réalisation, on solidarise les extrémités des fils enduits d'une même nappe après la formation de cette dernière. On coupe, ensuite, de préférence ensemble, les fils enduits d'une même nappe, à ladite longueur déterminée.

L'invention porte également sur le procédé de fabrication d'une pièce métallique avec au moins un insert ainsi obtenu. Selon ce procédé
Au moins un logement pour un insert est usiné dans un corps métallique formant le conteneur,
Ledit insert est disposé dans le logement,
Un couvercle métallique est placé sur le corps de façon à recouvrir l'insert,
Le couvercle est soudé sur le corps métallique,
L'ensemble du corps métallique avec couvercle est soudé par compression isostatique à chaud et
On usine ledit ensemble traité pour obtenir ladite pièce.

L'invention sera mieux comprise et d'autres buts détails caractéristiques et avantages de celles-ci apparaîtront plus clairement au cours de la description explicative détaillée qui suit, de modes de réalisation de l'invention donnés à titre d'exemple purement illustratif et non limitatif en référence aux dessins schématiques annexés.

Sur ces dessins
La figure 1 montre les différentes étapes 1a, à 1d de fabrication d'une pièce de forme allongée selon l'art antérieur ;
La figure 2 représente une vue de dessus d'une installation de fabrication d'un insert droit ;
La figure 3 montre l'installation de la figure 1, vue de profil ;
La figure 4 montre l'installation de face, une première nappe de fils enduits ayant été disposée dans le fond de l'outillage ;
La figure 5 montre l'outillage de la figure 4, une fois rempli et le clinquant supérieur mis en place ;
La figure 6 montre un dispositif de soudage adapté pour lier les fils enduits au support sous jacent ;
La figure 7 montre en perspective un insert fabriqué selon le procédé de l'invention.

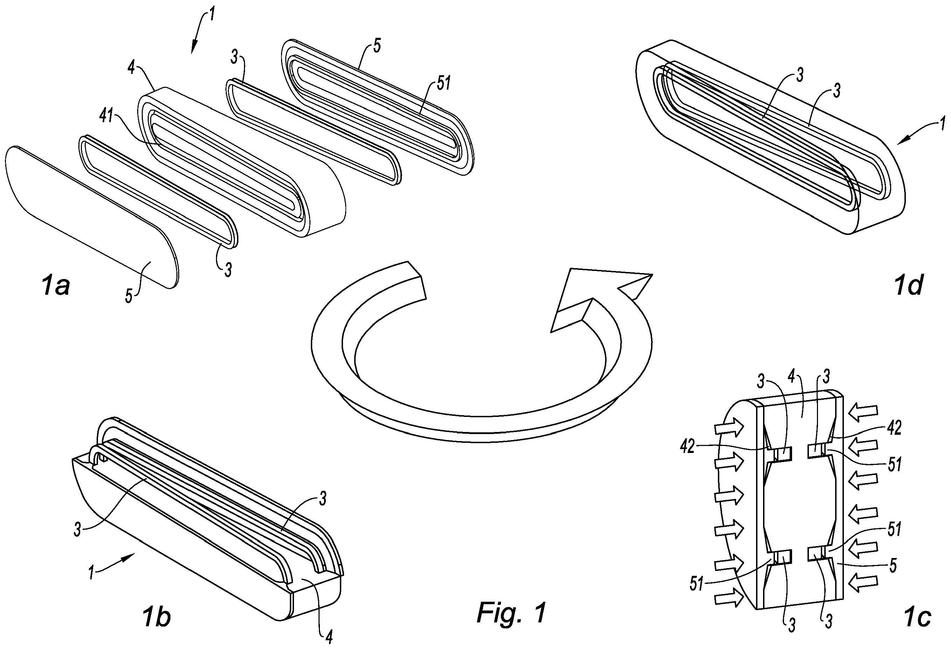

Sur la figure 1a, extraite de la demande de brevet FR 2.919.284 aux noms de Snecma et de Messier-Dowty, on voit un conteneur 1 avec un corps principal 4 de forme allongée, destiné à former une bielle d'un train d'atterrissage par exemple. On a usiné une rainure 41 sur chacune des deux faces du corps 4. Cette rainure permet le logement d'un insert 3 qui comprend deux portions rectilignes parallèles ou non entre elles réunies aux extrémités par une portion en arc de cercle. Les inserts sont du type à fibres céramiques enduites de métal tel que le titane.

Les rainures et les inserts sont de formes complémentaires de manière à ce que l'insert soit ajusté sans jeu dans la rainure. On note que la rainure dans le conteneur et le tenon sur le couvercle doivent parfaitement s'assembler pour éviter que les fibres, qui ont un très faible diamètre, de l'ordre de 0,25 mm, ne puissent s'échapper lors de la compaction isostatique à chaud. Deux couvercles 5 sont pourvus d'une partie en saillie formant tenon 51 et viennent recouvrir les faces du corps 4. Le tenon vient en appui sur l'insert logé dans la rainure et colmate cette dernière. On soude, par exemple par faisceau d'électron, le couvercle 5 au corps 4 en assurant le vide à l'intérieur du conteneur.

Le conteneur est visible sur la figure 1b ; il est en partie arraché pour montrer les inserts. Le conteneur est ensuite disposé dans une enceinte appropriée pour y subir un traitement de compaction isostatique à chaud. Ce traitement a pour but de rendre le conteneur, son couvercle et les nappes de fils enduits solidaires entre eux et former une pièce monolithique. La coupe transversale du conteneur de la figure 1c montre que les bords 42 de la rainure 41 sont chanfreinés de manière à ménager un jeu avec la partie du couvercle 5 adjacente au tenon 51. Lors de l'opération de compaction isostatique à chaud, la pression est exercée selon la direction perpendiculaire à la surface du couvercle générant l'affaissement des couvercles.

La pression et la chaleur, respectivement de l'ordre de 1000°C et 1000 bars permettent au métal de la matrice d'occuper les vides entre les fils enduits constituant l'insert. Le volume de l'insert diminue d'environ 23%. Le tenon est ainsi déplacé en direction du fond de la rainure et le jeu de part et d'autre du tenon est absorbé. À la fin du processus, le métal a fusionné et le conteneur s'est compacté; la pièce est ainsi renforcée par les fils emprisonnés dans la masse.

La figure 1d représente l'ébauche de pièce obtenue avec deux inserts visibles en transparence. L'ébauche est ensuite usinée de manière à obtenir la pièce souhaitée. Les fibres céramiques sont ainsi incorporées dans les branches de la pièce qui assurent la transmission des efforts en traction et compression.

Les inserts utilisés selon l'enseignement de ce brevet FR 2 919 283 sont de forme annulaire mais comme cela l'a été décrit dans la demande de brevet FR 2 919 284, ils peuvent être formés d'éléments rectilignes en barreaux. Dans ce dernier cas les inserts rectilignes sont incorporés, selon la technique exposée dans ce document, dans le conteneur après avoir été auparavant compactés.

La réalisation des inserts rectilignes selon FR 2 919 284 comprend l'enroulement des fils enduits autour d'un dispositif de bobinage de forme annulaire avec des portions rectilignes. La forme peut être oblongue, avec des portions rectilignes, ou bien polygonale dont les côtés du polygone constituent les portions rectilignes.

Après formation de l'enroulement du ou des fils en un anneau, les spires de l'anneau sont immobilisées entre elles au moyen de sangles métalliques soudées. L'ensemble est incorporé dans un conteneur et subit un traitement de compaction isostatique à chaud selon la technique décrite ci-dessus. A partir de la pièce semi finie on usine des inserts compacts de forme rectiligne que l'on incorpore individuellement dans des conteneurs pour la fabrication de pièces avec des renforts en fibres céramiques rectilignes.

Conformément à l'invention, on simplifie la réalisation des inserts en formant des inserts droits 13l constitués directement de fils enduits 13 rectilignes assemblés à la manière de fagots ou de faisceaux.

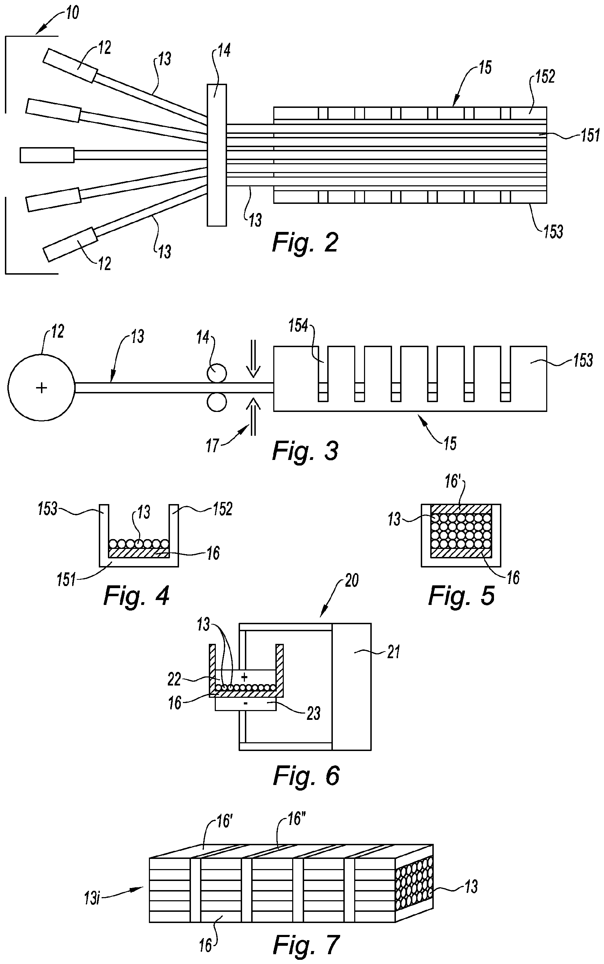

En se reportant à la figure 2, une installation permettant la mise en oeuvre du procédé de l'invention comprend un dévidoir 10 supportant une pluralité de bobines 12 sur lesquelles sont enroulés les fils enduits 13. Les fils enduits sont entraînés depuis leurs bobines respectives par un système à double rouleaux 14 vers lequel ils convergent. Le système est formé de deux rouleaux entraînés en rotation autour d'axes parallèles ; un des rouleaux au moins est moteur. Les fils enduits sont disposés en une couche, côte à côte, dans l'espace ménagé entre les deux rouleaux 14 et constituent en sortie une nappe de fils enduits 13 juxtaposés, parallèles entre eux. Immédiatement en aval des rouleaux 14, la nappe de fils est guidée dans un outillage en forme de gouttière droite 15 à fond plat 151 et deux panneaux latéraux 152 et 153 perpendiculaires à celui-ci et comprenant des zones ajourées154. La longueur de l'outillage en forme de gouttière 15 correspond à la longueur de l'insert 13i que l'on veut réaliser. La nappe est tirée dans l'outillage 15 sur une longueur équivalente à la longueur de l'insert 13i souhaitée.

Selon le mode de réalisation représenté sur les figures 2 à 5, un clinquant ou feuille métallique 16, mince, est disposé sur le fond de l'outillage en forme de gouttière 15 et la première nappe repose sur le clinquant. La largeur de la nappe est la même que celle du clinquant. Le métal du clinquant est de préférence le même que celui de la pièce métallique à laquelle l'insert est destiné. Il s'agit par exemple d'un alliage de titane.

Le nombre de fils de la nappe n'est pas limitatif, il dépend de la pièce à fabriquer, la représentation des figures 3 et 5 est simplement indicative, le diamètre des fils n'est pas à la même échelle que celle de la gouttière. Les fils sont juxtaposés dans la nappe sans laisser d'espace entre eux.

Selon un mode de liaison conforme à l'invention, les fils enduits sont fixés au clinquant 16, aux deux extrémités de la gouttière.

Deux techniques sont possibles, un moyen mécanique ou un moyen de soudage. Pour ce dernier, il s'agit de préférence d'un moyen comprenant un générateur à moyenne fréquence selon l'enseignement présenté dans le brevet au nom de la demanderesse EP 1 726 677. Cette technique est rappelée plus loin.

Dans le cas d'un maintien mécanique, on prévoit une sur-longueur aux extrémités afin de pouvoir maintenir la nappe. Ces sur-longueurs sont découpées et deviennent des chutes en final. Ce mode de réalisation n'est pas représenté.

Suivant la longueur voulue, des maintiens intermédiaires par soudage sont possibles.

La première nappe ainsi fixée à son support est découpée à l'entrée de la gouttière par un moyen de découpe approprié 17, tel qu'une cisaille.

La nappe, étant maintenue par le système à rouleaux 14, peut être de nouveau tirée pour constituer la nappe suivante que l'on vient déposer sur la première. Les fils enduits sont ainsi tous de même longueur,

L'opération est renouvelée jusqu'à atteindre une hauteur correspondant aux dimensions de l'insert 13i souhaité. A la fin, un deuxième clinquant 16' est mis sur le dessus, voir figure 5.

Des petits clinquants 16" formant des sangles sont ensuite positionnés latéralement au niveau des zones ajourées 154 de l'outillage 15 pour maintenir l'ensemble et éviter un foisonnement trop important des fils enduits à la manière d'agrafes faisant le tour du fagot de fils enduits. L'insert 13i est représenté fini à la figure 7.

En cas d'un maintien mécanique aux extrémités, non représenté, une opération supplémentaire de découpe des extrémités est à prévoir.

Selon un autre mode de réalisation non représenté, la nappe de fils enduits est maintenue en place par soudage aux extrémités mais aussi par des lignes de soudage le long de l'insert. Pour les nappes suivantes, celles ci sont soudées sur la nappe inférieure.

Selon ce mode de réalisation, on évite les systèmes de maintien mécanique des extrémités, le clinquant supérieur et les petits clinquants latéraux.

Conformément à une autre mode de réalisation non représenté, lorsque la forme de la cavité du conteneur le permet, on forme l'insert directement dans la cavité du conteneur. La première nappe est maintenue en place par soudage aux extrémités mais aussi si nécessaire par des lignes de soudage le long de l'insert. Pour les nappes suivantes, celles ci sont soudées sur la nappe inférieure. Cette configuration permet d'éliminer l'outillage en U ainsi que les différents clinquants.

Le présent procédé n'est pas limité à la réalisation d'inserts de section carrée ou rectangulaire. Le procédé de réalisation par empilage de nappes de fils enduits permet de réaliser des sections trapézoïdales en faisant varier la largeur des nappes successives de fils enduits.

Le présent procédé permet également la réalisation d'une pluralité d'inserts simultanément, on découpe les inserts dans la longueur du « fagot » ainsi obtenu.

L'insert une fois terminé ; tel que celui représenté à la figure 7, est incorporé à un conteneur métallique selon le procédé connu et décrit ci dessus pour former une pièce métallique.

Conformément à un mode de réalisation particulier de la pièce métallique, l'un des clinquants est utilisé à la fois comme support et comme couvercle du conteneur métallique dans lequel l'insert est disposé. Le couvercle est soudé sur le conteneur tout en réalisant le vide dans la pièce avant le traitement de compaction isostatique à chaud.

On décrit ci-après un procédé et un dispositif de soudage localisé d'un fil enduit ou d'une nappe liée ou d'un faisceau de fils enduits à un support métallique. Le support s'entend, soit d'un support métallique au sens propre, ici le clinquant disposé dans le fond de la gouttière ou le fond de la gouttière lui même, soit d'un autre fil enduit ou d'une autre nappe ou d'un autre faisceau de fils enduits.

Ce procédé et ce dispositif permettent d'obtenir une solidarisation du fil ou de la nappe ou du faisceau au support, tout en préservant l'intégrité des fibres céramiques s'étendant au sein du ou des fils. Le procédé et le dispositif autorisent également la réparation des fils en cas de rupture lors d'un procédé de bobinage ou de drapage.

En référence à la figure 5, on souhaite solidariser la nappe de fils enduits 13 au support 16, aux extrémités de la nappe. On utilise pour cela un dispositif 20 de soudage contact entre deux électrodes et passage d'un courant moyenne fréquence. Les fils enduits 13 sont ici vus en coupe.

Le dispositif 20 de soudage par électrodes comporte un générateur moyennes fréquences 21, relié à une électrode positive 22 et une électrode négative 23. Le dispositif de soudage comprend également un module qui pilote la force exercée sur les électrodes. Dans la forme de réalisation de la figure 5, l'électrode positive 22 et l'électrode négative 23 s'étendent transversalement à la nappe de fils enduits 13. Leur forme en coupe est uniforme sur toute cette largeur.

L'électrode positive 22, qui peut par exemple être en cuivre ou en tungstène, comporte une portion d'extrémité biseautée. Cette portion d'extrémité est conformée de façon à ce que les lignes de courant, convergent au maximum de manière à passer le long d'une ligne, ou bande, de contact, entre l'électrode positive 22 et la nappe de fils enduits 16, la plus étroite possible. Cette portion d'extrémité est arrondie de façon à ne pas cisailler les fils enduits ce qui risquerait de les endommager. Le rayon de cette portion d'extrémité est choisi de manière à obtenir la meilleure convergence possible des lignes de courant, sans toutefois être trop faible, afin de ne pas cisailler les fils enduits.

Un tel agencement des électrodes assure le soudage subséquent, de la nappe de fils enduits au support que constitue le clinquant 16, le long d'une bande très étroite. La concentration de courant est constante dans cette bande.

Le procédé de soudage par électrodes comporte la particularité de combiner le chauffage du métal de la nappe de fils enduits avec un léger forgeage, obtenu par mise sous pression par les électrodes. La puissance et le temps du chauffage et de la mise sous pression sont avantageusement pilotés, pour obtenir un échauffement minimal du métal, son forgeage, et réaliser ainsi un soudage, à l'état solide.

Le chauffage de la nappe de fils enduits est obtenu par le passage du courant entre l'électrode positive et l'électrode négative, du fait de l'intensité pilotée générée par le générateur moyennes fréquences 21. La pression sur la nappe est ici obtenue par mise sous pression par l'électrode positive 22 qui remplit ainsi une seconde fonction, de presse. La forme arrondie de sa portion d'extrémité revêt toute son importance pour cette fonction, puisqu'il ne faut pas cisailler les fils enduits de la nappe.

Le déroulement du procédé de soudage par électrodes ici décrit est le suivant. Comme nous venons de le préciser, il s'agit d'un procédé de soudage à l'état solide. L'électrode positive et l'électrode négative sont mises en contact, respectivement, avec la nappe de fils enduits et la surface inférieure de la gouttière. Dans une première phase, seule une pression est appliquée sur les fils enduits, entre les deux électrodes. La pression est amenée à une valeur P1 de préférence comprise entre 5 et 13 kg. La fonction de cette phase de mise sous pression "à froid" est d'assurer la bonne mise en contact des fils enduits, à la fois entre eux et sur les parois de leur support. Dans le cas où il s'agit des fils de deux nappes on assure la mise en contact de tous les fils concernés entre eux (une couche de fils remplissant le rôle de support pour l'autre). Cette bonne mise en contact garantit le bon passage du courant lors de la phase suivante. L'intensité est alors portée à une valeur comprise de préférence entre 500 et 1500 A. Cela entraîne l'échauffement du métal enrobant les fibres de céramique des fils enduits et le début du soudage.

La pression est ensuite portée à une valeur supérieure afin de mettre en oeuvre un forgeage supplémentaire des fils enduits de la nappe. Puis elle ramenée à sa valeur initiale le temps que la soudure refroidisse.

## Revendications

1. Procédé de fabrication d'un insert (13i) de forme droite destiné à être intégré par CIC dans un conteneur métallique, comprenant un faisceau de fils enduits (13) liés entre eux et de longueur déterminée, lesdits fils étant formés de fibres céramiques enduites de métal, **caractérisé par le fait que** l'on dispose des fils enduits sur une longueur déterminée dans un outillage en forme de gouttière droite, en les juxtaposant de façon rectiligne et on lie les fils enduits entre eux.

2. Procédé selon la revendication précédente consistant à former un empilement de nappes de fils enduits (13) rectilignes obtenues chacune en juxtaposant à plat un nombre déterminé de fils enduits jusqu'à obtenir un nombre de nappes déterminé, et à lier les nappes entre elles, de manière à ce qu'elles soient maintenues au moins aux extrémités.

3. Procédé selon la revendication précédente selon lequel on dépose une première nappe sur une feuille métallique (16), on recouvre la dernière nappe de l'empilement d'une feuille métallique (16') et on lie l'ensemble.

4. Procédé selon la revendication 2 ou 3 selon lequel on lie les nappes entre elles au moyen de sangles (16") de métal disposées transversalement le long de l'empilement de fils enduits (13).

5. Procédé selon l'une des revendications précédentes selon lequel on forme les nappes à partir de fils enduits que l'on déroule depuis des bobines de fils (12).

6. Procédé selon la revendication précédente selon lequel on forme une nappe en déroulant simultanément les fils de la nappe depuis des bobines séparées.

7. Procédé selon l'une des revendications précédentes selon lequel on solidarise les extrémités des fils d'une même nappe après la formation de cette dernière.

8. Procédé selon la revendication précédente selon lequel on coupe ensemble (17) les fils d'une même nappe, à la longueur correspondant à la longueur du faisceau de fils de l'insert.

9. Procédé de réalisation d'une pièce métallique, comprenant les étapes suivantes:
- usinage d'au moins un logement pour un insert dans un conteneur métallique,
- fabrication d'un insert, conformément à un procédé selon l'une quelconque des revendications 1 à 8,
- disposition de l'insert dans le logement
- placement d'un couvercle métallique sur le conteneur de façon à recouvrir l'insert,
- soudage du couvercle sur le conteneur métallique,
- traitement de l'ensemble du conteneur métallique avec couvercle par compression isostatique à chaud; et
- usinage dudit ensemble traité pour obtenir ladite pièce métallique.

## Patentansprüche

1. Verfahren zur Herstellung eines Einsatzes (13i) gerader Form, der dazu vorgesehen ist, durch heißisostatisches Pressen in einen Metallbehälter integriert zu werden, der ein Bündel beschichteter Drähte (13) umfasst, die untereinander verbunden sind und eine festgelegte Länge aufweisen, wobei die Drähte aus keramischen Fasern ausgebildet sind, die mit Metall beschichtet sind, **dadurch gekennzeichnet, dass** beschichtete Drähte auf einer festgelegten Länge in ein Werkzeug mit der Form einer geraden Rinne angeordnet werden, indem sie geradlinig nebeneinander gelegt werden und die beschichteten Drähte untereinander verbunden werden.

2. Verfahren nach dem vorhergehenden Anspruch, das daraus besteht eine Aufstapelung von Schichten geradliniger beschichteter Drähte (13) auszubilden, die jeweils durch flaches Nebeneinanderlegen einer festgelegten Anzahl an beschichteten Drähten erhalten werden, bis eine festgelegte Anzahl an Schichten erhalten wird, und die Schichten untereinander dergestalt zu verbinden, dass sie mindestens an den Enden gehalten werden.

3. Verfahren nach dem vorhergehenden Anspruch, wobei eine erste Schicht auf ein metallenes Blatt (16) abgelegt wird, die letzte Schicht der Aufstapelung mit einem metallenen Blatt (16') bedeckt wird und die Einheit verbunden wird.

4. Verfahren nach Anspruch 2 oder 3, wobei die Schichten untereinander mittels Metallbändern (16") verbunden werden, die entlang der Aufstapelung der beschichteten Drähte (13) quer angeordnet werden.

5. Verfahren nach den vorhergehenden Ansprüchen, wobei die Schichten ausgehend von beschichteten Drähten ausgebildet werden, die von den Drahtrollen (12) abgewickelt werden.

6. Verfahren nach dem vorhergehenden Anspruch, wobei eine Schicht ausgebildet wird, indem gleichzeitig die Drähte der Schicht von getrennten Rollen abgewickelt werden.

7. Verfahren nach einem der vorhergehenden Ansprüche, wobei die Enden der Drähte von ein- und derselben Schicht nach deren Ausbildung fest verbunden werden.

8. Verfahren nach dem vorhergehenden Anspruch, wobei die Einheit (17) der Drähte von ein- und derselben Schicht auf die Länge geschnitten wird, die der Länge des Drahtbündels des Einsatzes entspricht.

9. Verfahren zur Herstellung eines metallenen Teils, das die nachfolgenden Schritte umfasst:
- Bearbeiten mindestens einer Aufnahme für einen Einsatz in einem Metallbehälter,
- Herstellung eines Einsatzes gemäß einem Verfahren nach irgendeinem der Ansprüche 1 bis 8,
- Anordnung des Einsatzes in der Aufnahme,
- Platzierung eines Metalldeckels auf den Behälter dergestalt, dass der Einsatz bedeckt wird,
- Verschweißung des Deckels auf dem Metallbehälter,
- Behandlung der Einheit des Metallbehälters mit dem Deckel durch heißisostatisches Pressen; und
- Bearbeitung dieser behandelten Einheit, um das genannte Metallteil zu erhalten.

## Claims

1. A method for manufacturing a straight insert (13i) intended to be incorporated in a metal container by means of HIC, said insert comprising a bundle of coated wires (13) that are joined together and have a predefined length, said wires being made from metal-coated ceramic fibers, **characterized in that** coated wires are placed in a rectilinear juxtaposition over a predefined length in a straight gutter-shaped tool, and the coated wires are joined together.

2. The method as claimed in the preceding claim, consisting in forming a stack of layers of rectilinear coated wires (13) each obtained by the flat juxtaposition of a predefined number of coated wires until a predefined number of layers is obtained, and in joining together the layers so that they are held at least at the ends.

3. The method as claimed in the preceding claim, in which a first layer is deposited on a metal sheet (16), the final layer of the stack is covered with a metal sheet (16') and the assembly is joined together.

4. The method as claimed in claim 2 or 3, in which the layers are joined together by means of metal straps (16'') placed transversely along the stack of coated wires (13).

5. The method as claimed in the preceding claims, in which the layers are formed from coated wires which are unwound from reels of wires (12).

6. The method as claimed in the preceding claim, in which a layer is formed by simultaneously unwinding the wires of the layer from separate reels.

7. The method as claimed in the preceding claims, in which the ends of the wires of a given layer are joined together after the formation thereof.

8. The method as claimed in the preceding claim, in which the wires of a given layer are cut together (17) to the length corresponding to the length of the bundle of wires of the insert.

9. A method for manufacturing a metal part, comprising the following steps:
- machining at least one recess for an insert in a metal container,
- manufacturing an insert, according to a method as claimed in any of claims 1 to 8,
- placing the insert in the recess,
- placing a metal cover on the container so as to cover the insert,
- welding the cover to the metal container,
- treating the assembly of the metal container with cover by hot isostatic compression; and
- machininig said treated assembly to obtain said part.
